# EUROPEAN PATENT SPECIFICATION

(11) **EP 1 904 334 B1**
(45) Date of publication and mention of the grant of the patent: **15.04.2009**
(21) Application number: 06744303.6
(22) Date of filing: 30.06.2006
(51) Int. Cl.: B60N 2/28, B60N 3/10, A47G 23/02

(54) **ARTICLE HOLDER**
ARTIKELHALTER
SUPPORT D ARTICLES

(30) Priority: 01.07.2005 GB 0513459; 02.07.2005 GB 0513649; 05.07.2005 GB 0513733; 15.12.2005 GB 0525534
(43) Date of publication of application: 02.04.2008
(73) Proprietor: Britax Excelsior Limited, Andover, Hampshire SP10 3UW (GB)
(72) Inventor: FREEMAN, Vincent, Britax Excelsior Limited, Andover, Hampshire SP10 3UW (GB); POWELL, Ian, Britax Excelsior Limited, Andover, Hampshire SP10 3UW (GB); JAMES, Gareth, Britax Excelsior Limited, Andover, Hampshire SP10 3UW (GB)
(74) Representative: Suèr, Steven Johannes
(86) International application number: PCT/GB2006/002427
(87) International publication number: WO 2007/003907

(56) References cited:
- US-A- 5 297 709
- US-A1- 2002 050 501
- US-A1- 2003 137 168
- US-A1- 2004 124 677
- US-B1- 6 692 053

## Description

The present invention relates to article holder and in particular to such a holder when provided within a child safety seat.

In this respect, child safety seats are well known for assisting in securing a child within the interior of a vehicle. Such seats take many forms but in general involve a seat base which rests on the vehicle seat base, and a seat back which, in the case of forwardly facing child seats, rests against the vehicle seat back.

Known child seats have incorporated arrangements for holding articles such as cups. One such seat is disclosed in US2005/0082888, which shows an object holder which is pivotally mounted to move between retracted and extended positions. In the retracted position the holder is stowed within the seat base, the holder pivoting transversely to the side of the seat base when needed.

Furthermore, document US-A-2002/0 050 501 discloses an article holder according to preamble of claim 1.

This known arrangement however suffers problems in that with modern vehicle seat interiors, the vehicle seat cushions have contoured profiles, often with the side edges of the seat base and seat back being raised to support and envelope the occupant. Such contoured profiles can cause problems in relation to the correct mounting and fixing of child seats, but also more specifically in the present context in relation to operation of such article holders. In this connection, the path of holders such as disclosed in US2005/0082888 can be impeded by such raised side edges, impairing their use.

The present invention seeks to resolve such problems of known arrangements.

According to a first aspect there is provided an article holder for a child seat, the holder comprising:-
a holder portion for holding one or more articles;
a mounting in relation to which said holder portion is movably mounted;
wherein the holder portion and said mounting are configured for relative sliding movement there between along an arcuate path. Such an arrangement provides for an effective means of actuating the article holder.

Conveniently, the holder portion slides on the mounting. As such, the holder portion can move across the mounting for deployment of the article holder.

Preferably, one of the holder portion and mounting has an arcuate guide track for receiving guide formations provided to the other of the holder portion and mounting. The guide track and guide formations provide a reliable means for controlling the deployment of the article holder.

Conveniently, the article holder has deployed and stowed positions, wherein in use, in moving from the stowed to the deployed position the holder portion moves upwards and outwards along said arcuate path. In this way, deployment of the article holder is less likely to be impeded by, for example, raised contours of a vehicle seat.

Conveniently, the mounting comprises a shell for mounting within a recess provided to a child seat. The mounting means and holder portion can be therefore be provided together as a unit ready for installation within a suitable recess in a seat. The shell and holder portion may each have a wedge shaped configuration for optimising space usage.

Conveniently, in a stowed position, the holder is substantially received in the mounting. As such, when stowed the article holder lies substantially flush with the seat enhancing its compactness.

Preferably, the holder portion and mounting have cooperating detent formations for assisting in holding the holder in its deployed position. In this way the article holder will remain available for storage of articles unless closed by a user.

Whilst the article holder can be provided in the seat back, it is conveniently provided in a seat base of a child seat.

According to a further aspect of the present invention there is provided an article holder for a child seat, the holder comprising:- a holder portion for holding one or more articles, the holder portion having one or more guide formations for engagement with one or more complementary formations on a holder portion mounting for slidably guiding the holder portion along an arcuate path between deployed and stowed positions.

An example of the present invention will now be described with reference to the accompanying drawings, of which:-
Figures 1 and 2 show perspective and side views of a child seat incorporating an article holder according to an embodiment of the present invention, with the article holder in a stowed position;
Figure 3 shows a perspective view of the child seat of Figures 1 and 2 showing the article holder in a deployed position;
Figures 4 and 5 show the article holder of the present invention, as slidably mounted on a mounting, removed from a child seat for illustrative purposes, showing the operation of the article holder of the present invention between stowed and deployed positions;
Figure 6 shows a perspective view of the holder portion of the article holder of the present invention;

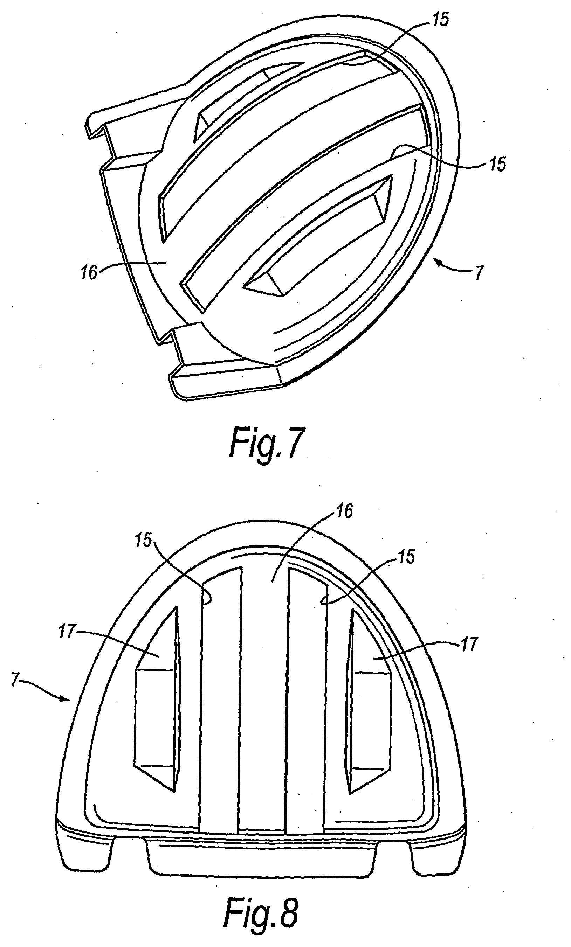

Figure 7 shows a perspective exterior view of a mounting of the article holder of the present invention; and
Figure 8 shows a front interior view of the mounting of Figure 7.

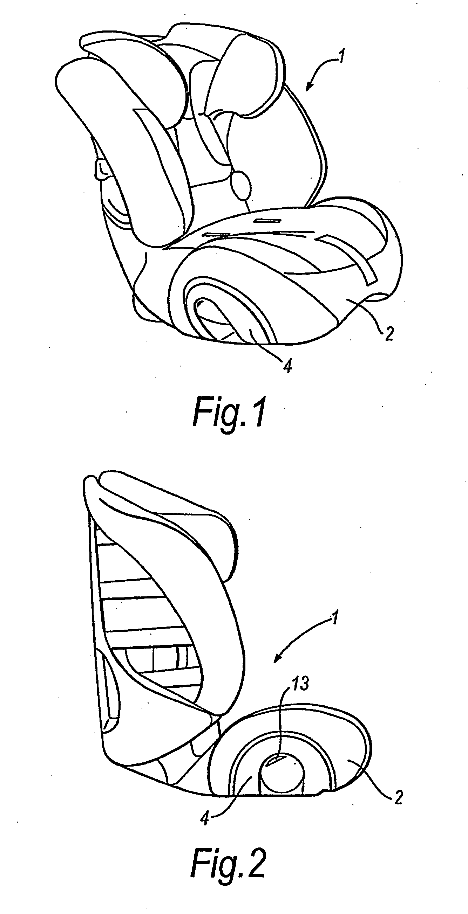

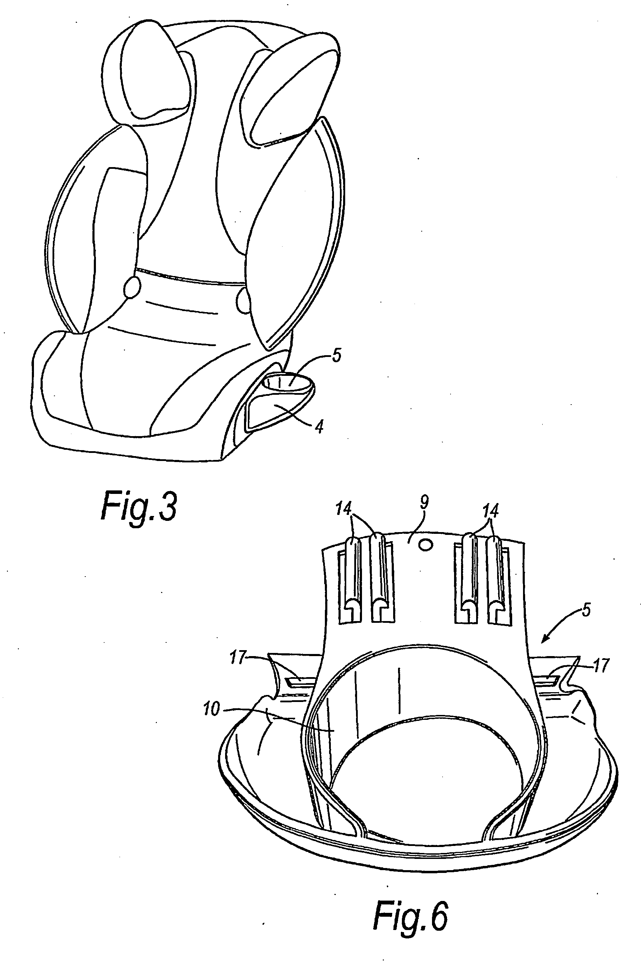

As shown in Figures 1 to 3, a child seat 1 comprises generally a seat base 2 and a seat back 3. An article holder 4 is provided to a side of the seat base 2. In Figure 3, the article holder 4 is shown deployed, such that a cup or bottle holding receptacle 5 projects outwardly from the side of the seat base.

In Figures 1 and 2, the article holder 4 is shown stowed, and as such is substantially flush with the side profile of the seat base 2.

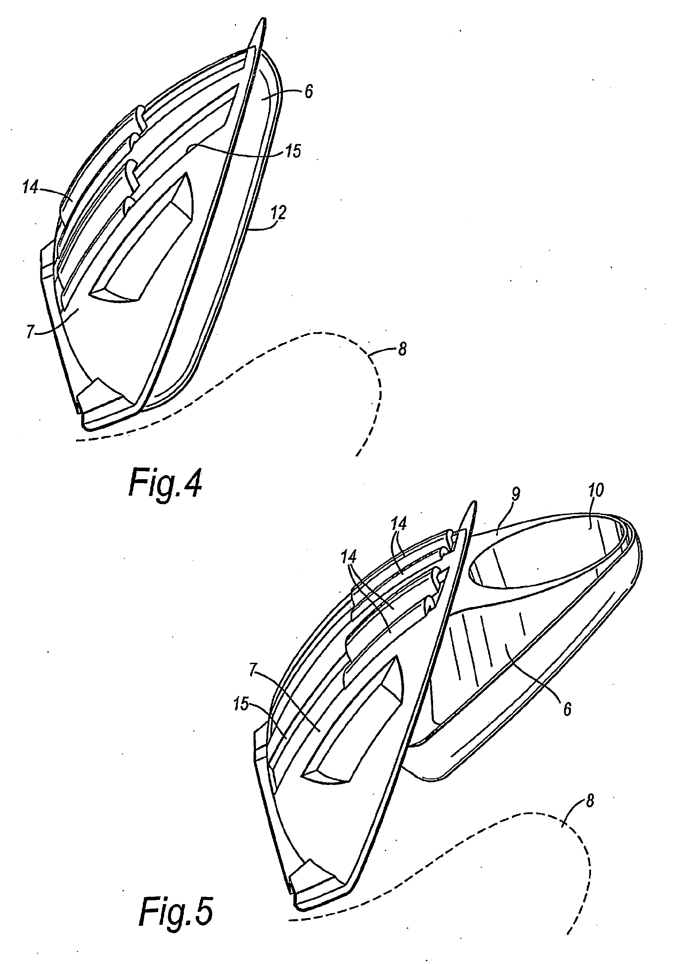

Figures 4 and 5 illustrate how the article holder moves between stowed and deployed positions. More particularly, movement from the stowed to the deployed positions involves a holder portion 6 of the holder 1 moving upwardly and outwardly in relation to a mounting 7 provided to the seat base 2. As shown, this movement allows the article holder to be deployed unimpeded even where the seat is provided to a vehicle which incorporates raised seat side edges 8 (shown in dashed lines).

Figure 6 shows detail of the holder portion 6. In this regard, the holder portion has a generally curved upper running surface 9, which engages with the mounting, also having an arcuate interior surface profile. The holder portion has formation 10 for seating an article such as a cup, this ,formation being exposed when the holder is in its deployed position.

An exterior surface 12 of the holder is formed so as to be generally flush with the seat side profile when the holder is in its stowed position. Incorporated into the exterior surface 12 is a finger grip formation 13 in the form of an aperture as shown in Figure 2, which facilitates deployment and stowage of the holder.

The holder portion moreover has sliders 14, provided in the form of clip elements, which project from the arcuate running surface 9. These sliders 14 cooperate with guide tracks 15 provided within the mounting 7. The guide tracks take the form of slots in the mounting. The mounting is in this regard formed from a half shell segment, the slots being provided in an arcuate back wall 16 of the shell.

With the sliders 14 clipped into the slots, the arcuate surfaces of the holder and mounting cooperate, and allow relative slidable movement. The extent of the slots determines the amount of movement between the stowed and deployed positions. Formations 17 are provided to the holder portion and mounting and are arranged to cooperate with the holder portion in the deployed position. These formations assist with holding the holder in the deployed position.

Whilst the article holder may have a recess formed to hold a bottle or cup, it may have additional recesses for electronic games, or music or telephone devices. An article holder may be provided on each side of the child seat, and these may be configured for holding different articles.

The article holder may be used with child seats having backrests or with booster seats.

As shown, the mounting 7 comprises, a shell, which can be mounted within a suitable recess provided in a child seat. The mounting 7 and holder portion 6 can be therefore be provided together as a unit ready for installation within such a suitable recess in a seat.

## Claims

1. An article holder (4) for a child seat (1), the holder (4) comprising:-
a holder portion (6) for holding one or more articles, said holder portion (6) having an arcuate running surface (9);
a mounting (7) in relation to which said holder portion (6) is movably mounted; **characterised in that**
said arcuate running surface (9) of the holder portion (6) co-operates with said mounting (7) to facilitate a relative sliding movement there-between, said relative sliding movement describing an arc.

2. An article holder (4) according to claim 1, wherein the holder portion (6) slides on the mounting (7).

3. An article holder (4) according to claim 1 or 2, wherein one of the holder portion (6) and mounting (7) has an arcuate guide track (14, 15) for receiving guide formations (14, 15) provided to the other of the holder portion (6) and mounting (7).

4. An article holder (4) according to any preceding claim, wherein the article holder (4) has deployed and stowed positions, wherein in use, in moving from the stowed to the deployed position the holder portion (6) moves upwards and outwards along said arc.

5. An article holder (4) according to any preceding claim, wherein the mounting (7) comprises a shell for mounting within a recess provided to a child seat (1).

6. An article holer (4) according to claim 5, wherein the shell and holder portion (6) each have a wedge shaped configuration.

7. An article holder (4) according to any preceding claim, wherein in a stowed position, the holder is fully received in the mounting (7).

8. An article holder (4) according to any preceding claim, wherein the holder portion (6) and mounting (7) have cho-operating detent formations for assisting in holding the holder (4) in its deployed position.

9. An article holder (4) according to any preceding claim, wherein the article holder (4) is provided in a seat base (2).

10. An article holder (4) according to claim 1 wherein the holder portion (6) has one or more guide formations (14) for engagement with one or more complementary formations (15) on said mounting (7) for slidably guiding the holder portion (6) between deployed and stowed positions.

11. A child seat (1) incorporating an article holder (4) according to any preceding claim.

## Patentansprüche

1. Ein Artikelhalter (4) für einen Kindersitz (1), wobei der Halter (4) aus folgenden besteht: -
einem Halteteil (6) zum Halten von einem oder mehreren Artikeln, wobei das genannte Halteteil (6) eine bogenförmige Lauffläche (9) aufweist;
einer Halterung (7), in Bezug auf welche das genannte Halteteil (6) beweglich montiert ist; **dadurch ausgezeichnet, dass**
die genannte bogenförmige Lauffläche (9) des Halteteils (6) mit der genannten Halterung (7) zusammenwirkt, um eine relative Gleitbewegung zwischen diesen zu ermöglichen, wobei diese relative Gleitbewegung in einem Bogen folgt.

2. Ein Artikelhalter (4) nach Anspruch 1, bei dem das Halteteil (6) auf der Halterung (7) gleitet.

3. Ein Artikelhalter (4) nach Anspruch 1 oder 2, bei dem eines der Halteteile (6) und der Halterung (7) eine bogenförmige Schienenführung (14, 15) aufweist, um die Schienenprofile, die (14,15) am anderen Halteteil (6) und Halterung (7) vorgesehen sind, aufzunehmen.

4. Ein Artikelhalter nach den vorhergehenden Ansprüchen, bei dem der Artikelhalter (4) eine ausgefahrene und eine verstaute Position hat, wobei bei Verwendung das Halteteil (6) bei Ausfahren von der verstauten in die ausgefahrene Position entlang des genannten Bogens nach oben und außen geführt wird.

5. Ein Artikelhalter (4) nach den vorhergehenden Ansprüchen, bei dem die Halterung (7) aus einem Gehäuse besteht, welches in eine an einem Kindersitz (1) vorgesehene Vertiefung eingesetzt werden kann.

6. Ein Artikelhalter (4) nach Anspruch 5, bei dem das Gehäuse und Halteteil (6) jeweils eine keilförmige Konfiguration aufweisen.

7. Ein Artikelhalter (4) nach den vorhergehenden Ansprüchen, bei dem der Halter in der verstauten Position ganz in der Halterung (7) aufgenommen wird.

8. Ein Artikelhalter (4) nach den vorgehenden Ansprüchen, bei dem das Halteteil (6) und die Halterung (7) zusammenwirkende Einrastungen aufweisen, die dazu beitragen, dass der Halter (4) in seiner ausgefahrenen Position verbleibt.

9. Ein Artikelhalter (4) nach den vorhergehenden Ansprüchen, bei dem der Artikelhalter (4) in einer Sitzbasis (2) eingelassen ist.

10. Ein Artikelhalter (4) nach Anspruch 1, bei dem das Halteteil (6) eine oder mehrere Schienenprofile (14) hat, die in eine oder mehrere ergänzenden Führungen (15) auf der genannten Halterung (7) einrasten, damit das Halteteil (6) entsprechend zwischen der ausgefahrenen und der verstauten Position hin- und hergeführt werden kann.

11. Ein Kindersitz (1) mit einem Artikelhalter (4) nach den vorhergehenden Ansprüchen.

## Revendications

1. Support d'article (4) pour siège d'enfant (1), le support (4) comportant :
une partie support (6) pour tenir un ou plusieurs articles, ladite partie support (6) étant munie d'une surface de roulement courbe (9) ;
un socle (7) par rapport auquel ladite partie support (6) est montée de manière mobile ;
**caractérisé en ce que**
ladite surface de roulement courbe (9) de la partie support (6) coopère avec ledit socle (7) pour faciliter un mouvement de glissement relatif de l'une par rapport à l'autre, ledit mouvement de glissement relatif décrivant un arc.

2. Support d'article (4) conforme à la revendication 1, où la partie support (6) plisse sur le socle (7)

3. Support d'article (4) conforme à la revendication 1 ou 2, où une des parties support (6) et socle (7) est dotée d'un chemin de guidage courbe (14, 15) destiné à recevoir des formations de guidage (14, 15) prévues sur l'autre de la partie support (6) et du socle (7).

4. Support d'article (4) conforme à une quelconque des revendications précédentes, où le support d'article (4) a des positions déployée et repliée selon lesquelles, à l'usage, lorsqu'elle se déplace de la position repliée à la position déployée, la partie support (6) se déplace vers le haut et vers l'extérieur le long dudit arc.

5. Support d'article (4) conforme à une quelconque des revendications précédentes, où le socle (7) comporte une coque à monter à l'intérieur d'un renfoncement prévu dans un siège d'enfant (1).

6. Support d'article (4) conforme à la revendication 5, où la coque et la partie support (6) ont chacune une configuration en biseau.

7. Support d'article (4) conforme à une quelconque des revendications précédentes, où, en position repliée, le support est entièrement contenu dans le socle (7).

8. Support d'article (4) conforme une quelconque des revendications précédentes, où la partie support (6) et le socle (7) ont des formations de retenue qui coopèrent pour aider à maintenir le support (4) dans sa position déployée.

9. Support d'article (4) conforme à une quelconque des revendications précédentes, où le support d'article (4) est prévu dans la partie inférieure d'un siège (2).

10. Support d'article (4) conforme à la revendication 1, où la partie support (6) est dotée d'une ou plusieurs formations de guidage (14) destinées à s'engager avec une ou plusieurs formations complémentaires (15) sur ledit socle (7) pour guider en faisant glisser la partie support (6) entre les positions déployée et repliée.

11. Siège d'enfant (2) incorporant un support d'article (4) conforme à une quelconque des revendications précédentes.
